# EUROPÄISCHE PATENTSCHRIFT

(11) **EP 2 849 121 B1**
(45) Veröffentlichungstag und Bekanntmachung des Hinweises auf die Patenterteilung: **02.05.2018**
(21) Anmeldenummer: 13004422.5
(22) Anmeldetag: 11.09.2013
(51) Int. Cl.: G06K 19/06, G06K 19/07, G06K 19/08

(54) **Verpackungskennzeichnung und Verfahren zur Kennzeichnung einer Verpackung und Verifizierung eines verpackten Produktes**
Package marking and method for marking a package and verification of a packaged product
Identification d'emballage et procédé d'identification d'un emballage et de vérification d'un produit emballé

(43) Veröffentlichungstag der Anmeldung: 18.03.2015
(73) Patentinhaber: Plöckl, Roman, 85276 Pfaffenhofen (DE)
(72) Erfinder: Plöckl, Roman, 85276 Pfaffenhofen (DE)
(74) Vertreter: Spranger, Stephan

(56) Entgegenhaltungen:
- DE-A1-102008 005 444
- DE-A1-102009 016 429
- US-A1- 2008 191 027
- US-A1- 2012 138 688
- US-A1- 2013 092 736

## Beschreibung

Die Erfindung betrifft eine Verpackungskennzeichnung und ein Verfahren zur Kennzeichnung einer Verpackung und Verifizierung eines verpackten Produktes.

Derartige Verpackungskennzeichnungen werden bisher allein durch mindestens eine Kennzeichnungscodemarke verifiziert, die offen auf einer Verpackungseinheit angeordnet ist und beim Verkauf eines Produktes in der Verpackungseinheit mit Verpackungskennzeichnung durch Scannen oder Auslesen des zugeordneten Datensatzes der einen Kennzeichnungscodemarke verifiziert wird. Verpackte markengeschützte pharmazeutische Produkte oder verpackte markengeschützte Lebensmittelprodukte sind häufigen Fälschungen ausgesetzt, indem die Kennzeichnungscodemarke kopiert, entwendet und auf nachgemachten Verpackungseinheiten mit falschen oder minderwertigen Produkten und/oder Substanzen in den Handel gebracht werden.

Die Deutsche Offenlegungsschrift DE 10 2008 005 444 A1 beschreibt ein Verfahren zum Aufbewahren und Abrufen von mitnehmbaren Gegenständen oder Waren. Dazu werden die Gegenstände die als nicht mitnehmbar beanstandet werden, in eine Verpackung eingebracht, die mit einer ersten üblicherweise verschlüsselten Kennung versehen ist, und der Eigentümer bekommt eine zweite alphanumerische lesbare Kennung, die abreißbar an der ersten Kennung angeordnet ist, die mit der ersten korreliert ist. Den Kennungen werden Datensätze zugeordnet und in einer Datenbank eines Lagerservices gespeichert, so dass bei Eingabe oder Vorlage der zweiten Kennung der beanstandete Gegenstand dem Eigentümer nach Abgleich mit der ersten verschlüsselten Kennung zurückgegeben oder an den Eigentümer versandt werden kann Dieser Stand der Technik zeigt den Oberbegriff von Anspruch 1. Die Deutsche Offenlegungsschrift DE 10 2009 016 429 A1 beschreibt eine statische Flachdichtung mit einer offenen und einer verdeckten Kennzeichnungscodemarke, die eindimensional (Barcode), zweidimensional (Matrixcode), als RFID-Inlay oder als Zahlen-/Buchstabenkombination ausgeführt sein können. Wobei Datensätze der Kennzeichnungscodemarken zentral gespeichert sind, und wobei die Kennzeichnungscodemarken vor Fälschungen schützen sollen. Dazu sind die Kennzeichnungscodemarken örtlich getrennt voneinander auf einem Gegenstand angeordnet.

Aufgabe der Erfindung ist es, ein Multi-Code-Secure-Etikett als Verpackungskennzeichnung zu schaffen, das auf einfache und kostengünstige Weise eine Echtheitsüberprüfung ermöglicht und eine Produktsicherheit nach der Maxime, was auf der Verpackung drauf ist, soll auch in der Verpackung drin sein, durch eine verbesserte Kennzeichnungscodemarkierung verbessert abzusichern. Eine weitere Aufgabe besteht darin, ein geeignetes Verfahren zur verbesserten Kennzeichnung einer Verpackung und Verifizierung eines verpackten Produktes oder einer verpackten Substanz anzugeben.

Diese Aufgabe wird erfindungsgemäß mit einer Verpackungseinheit mit den Merkmalen gemäß dem unabhängigen Vorrichtungsanspruch 1 gelöst. Die Merkmale eines verbesserten Verfahrens zur Kennzeichnung einer Verpackung und Verifizierung in Form einer Echtheitsprüfung eines verpackten Produktes werden mit dem unabhängigen Verfahrensanspruch 8 offenbart.

Eine exemplarische Ausführungsform weist eine Verpackungskennzeichnung auf, die mindestens eine erste Kennzeichnungscodemarke und mindestens eine zweite Kennzeichnungscodemarke vorsieht. Die mindestens erste Kennzeichnungscodemarke ist offen auf einer Verpackungseinheit angeordnet, während die mindestens zweite Kennzeichnungscodemarke verdeckt auf der Verpackungseinheit angeordnet ist. In einer zentralen Datenbank sind Datensätze abrufbar erfasst, wobei ein erster Datensatz der mindestens ersten Kennzeichnungscodemarke zugeordnet ist und/oder ein zweiter Datensatz der mindestens zweiten Kennzeichnungscodemarke zugeordnet ist. Darüber hinaus ist jeweils der zweite Datensatz dem ersten Datensatz eindeutig zugeordnet.

Diese Verpackungskennzeichnung hat den Vorteil, dass sie mithilfe der ersten offenen und der zweiten verdeckten Kennzeichnungscodemarke einen Gegenstand, sei es als Substanz, Vorprodukt, Zwischenprodukt oder als Endprodukt in der mit einer integrierten Multi-Code-Secure-Etikette versehenen Verpackung auf Echtheit geprüft werden kann, indem die offene Kennzeichnungscodemarke anschließend unter Freilegen der verdeckt angeordneten Kennzeichnungscodemarke überprüft werden kann. Mit dem Anordnen der offenen und der verdeckten Kennzeichnungscodemarke auf einer Verpackungseinheit ist der Vorteil verbunden, dass die Kennzeichnungscodemarken frei wählbar sind und nach außen durch ein transparentes Kunststofffolienstück auf der ersten Kennzeichnungscodemarke und durch ein nach außen nicht transparentes Abdeckungsfolienstück auf der zweiten Kennzeichnungscodemarke geschützt sein können.

Die mindestens zweite Kennzeichnungscodemarke kann beabstandet zu der mindestens ersten Kennzeichnungscodemarke auf der Verpackungseinheit angeordnet sein. Diese Beabstandung zwischen der ersten und der zweiten Kennzeichnungscodemarke kann beispielsweise durch Aufbringen der Kennzeichnungscodemarken auf verschiedenen Seiten, auf verschiedenen Ecken oder unterschiedlichen Faltlaschen der Verpackung verwirklicht werden. Auch ist es möglich, auf gleichen Seiten der Verpackung die Kennzeichnungscodemarken an verschiedenen Eckbereichen der Verpackung anzuordnen oder überbrückend an unterschiedlichen Faltkanten der Verpackungseinheit anzubringen. Ferner können die Kennzeichnungscodemarken räumlich dadurch getrennt werden, dass die erste Kennzeichnungscodemarke auf einer Außenfläche der Verpackungseinheit offen angeordnet ist und die zweite der Kennzeichnungscodemarken verdeckt auf einer Innenfläche der Verpackungseinheit beispielsweise auf einer Faltlasche eines Faltkartons angeordnet ist.

Weiterhin ist es vorgesehen, dass die mindestens erste Kennzeichnungscodemarke und die mindestens zweite Kennzeichnungscodemarke beabstandet zueinander auf eine gemeinsame einseitig klebende Etikettierfolie aufgedruckt sind. Dieses hat den Vorteil, dass bei einer Echtheitsprüfung nicht lange nach der verdeckten zweiten Kennzeichnungscodemarke zu suchen ist, da sie gemeinsam mit der ersten Kennzeichnungscodemarke beabstandet von dieser auf eine klebende Etikettierfolie zu einem Multi-Code-Secure-Etikett aufgedruckt ist.

Um die zweite Kennzeichnungscodemarke auf der Verpackungseinheit zu verdecken, wird in einer weiteren Ausführungsform diese mit einer optisch intransparenten Abziehfolie abgedeckt. Dies weist den Vorteil auf, dass für eine Echtheitsprüfung der Substanzen und Produkte, die in der Verpackungseinheit eingeschlossen sind, lediglich die verdeckende transparente Abziehfolie abzuziehen ist, um die zweite als Master-Kennzeichnungscodemarke aufgebrachte Kennzeichnungscodemarke freizulegen und auslesen zu können.

Eine weitere Ausführungsform sieht vor, dass die mindestens zwei-te Kennzeichnungscodemarke von einer optisch intransparenten Rubbelfolie verdeckt ist. Die Rubbelfolie besteht dazu aus einer optisch transparenten Trägerfolie und einer aufgebrachten intransparenten Beschichtung, die leicht mit mechanischen Hilfen heruntergerubbelt werden kann. Durch die transparente Trägerfolie wird beim Entfernen der Rubbelbeschichtung die unter der transparenten Trägerfolie angeordnete zweite Kennzeichnungscodemarke sichtbar, die nun durch die optisch transparente Trägerfolie hindurch ausgelesen werden kann. Die transparente Trägerfolie bildet gleichzeitig eine mechanische Schutzfolie für die zweite Kennzeichnungscodemarke.

Bei der Erfindung ist es vorgesehen, dass die mindestens erste Kennzeichnungscodemarke und die mindestens zweite Kennzeichnungscodemarke übereinander auf der Verpackungseinheit angeordnet sind. Dabei ist es vorgesehen, dass die erste Kennzeichnungscodemarke die zweite Kennzeichnungscodemarke vollständig abdeckt. Beim Entfernen einer derartigen Abdeckung wird erfindungsgemäß die erste Kennzeichnungscodemarke zerstört, die vorzugsweise auf einer intransparenten Rubbelschicht oder auf einer die zweite Kennzeichnungscodemarke vollständig abdeckenden intransparenten Abziehfolie aufgedruckt ist. Mit dem übereinander Stapeln der ersten und zweiten Kennzeichnungscodemarken ist jedoch in vorteilhafter Weise eine Flächeneinsparung verbunden. Dabei kann die zweite Kennzeichnungscodemarke auf eine einseitig klebende Etikettierfolie aufgedruckt sein und von der ersten Kennzeichnungscodemarke vollständig verdeckt sein.

Die Kennzeichnungscodemarken können vorzugsweise auf Verpackungen aus Kunststoff auch schmelztechnisch verankert werden, indem Innenflächen von mit Kennzeichnungscodemarken bedruckten Kunststofffolienstücken auf oder in einen vorgewärmten oder vorgeheizten Oberflächenbereich der Kunststoffverpackung ein- oder aufschmelzbar angeordnet sind. Durch die schmelztechnische Verbindung der Innenflächen auf Außenflächenbereichen der Kunststoffverpackung bleiben die Kennzeichnungscodemarken unlösbar mit einer derartigen Kunststoffverpackung verbunden.

Die Verpackungseinheit selbst kann beispielsweise ein vorgeformtes, gefaltetes oder zugeschnittenes dünnwandiges Kunststoffmaterial oder Zellulosematerial aufweisen. Entscheidend ist lediglich, dass die Innenfläche einer Trägerfolie mit aufgedruckten Kennzeichnungscodemarken mit dem Außenbereich der Verpackung verklebt, verschmolzen oder in anderer Weise stoffschlüssig verbunden ist. Ein Entfernen der Kennzeichnungscodemarken von der jeweiligen Verpackung ist nur mittels erheblicher Beschädigung der Verpackung oder der Kennzeichnungscodemarken möglich. Somit eignen sich die erfindungsgemäßen Kennzeichnungscodemarken besonders für die Kennzeichnung von Flaschen, Behältern oder Verpackungspaketen, auf denen beispielsweise Kennzeichnungshinweise auf Verkaufspreise, Verfallsdatum der mittels der Verpackung verpackten Produkte oder Substanzen, Herkunftsangaben der in der Verpackungseinheit eingeschlossenen Produkte oder Angaben zu der Zusammensetzung der Produkte oder Substanzen, Angaben zu dem Hersteller der Produkte oder Substanzen oder Angaben zu Produktionsverfahren der Produkte oder Substanzen in den Kennzeichnungscodemarken als zugeordnete Datensätze vorgesehen werden, die unlösbar mit der Verpackungseinheit offen bzw. verdeckt bis zum Verkauf und bis zu einer Echtheitsprüfung verbunden bleiben.

Diese Unlösbarkeit der Kennzeichnungscodemarken mit derartigen Kennzeichnungshinweisen und Informationen kann bei Kunststoffverpackungen durch eine Ein- oder Aufschmelztechnik erreicht werden und bei Celluloseverpackungen durch ein Aufkleben von Etiketten oder durch ein Aufdrucken der Kennzeichnungscodemarken direkt auf die Verpackungseinheit realisiert werden. Außerdem sind die erfindungsgemäßen eindeutig zugeordneten Kennzeichnungscodemarken in der Lage, das herkömmliche Etikettieren von Gegenständen wie Flaschen, Dosen oder Verpackungspakete zu ersetzen mit dem Vorteil, dass eine derartige Etikettierung der Verpackungseinheiten mit offenen und verdeckten Kennzeichnungscodemarken die Echtheitsprüfung der verpackten Produkte oder Substanzen ermöglicht, indem Datensätze, die der mindestens ersten Kennzeichnungscodemarke und der mindestens zweiten Kennzeichnungscodemarke in einer zentralen Datenbank abrufbar gespeichert sind und für einen Echtheitsprüfungsvergleich zur Verfügung stehen.

In einer weiteren Ausführungsform der Erfindung sind die Kennzeichnungscodemarken ein Aufdruck, der vorzugsweise einen Barcodeaufdruck oder einen Datamatrixcodeaufdruck aufweist, so dass die Kennzeichnungscodemarken mit automatischen Lesegeräten erfassbar und auswertbar sind. Auch ist es in einer weiteren Ausführungsform der Erfindung möglich, als Kennzeichnungscodemarken Funkchips oder RFID-Inlay (Radio Frequency Identification Inlay) vorzusehen, so dass ein funktechnischer Zugriff auf die Datensätze der Funkchips bzw. der RFID-Inlay möglich ist und ein Vergleich mit den gespeicherten Datensätzen möglich ist. Auch können für eine nicht automatische Auslesung z.B. Ziffern und/oder Buchstabenkombinationen mit den generierten Kennzeichnungscodemarken aufgedruckt werden. Hierdurch können die Originalität der Kennzeichnungscodemarken oder des Produktes über eine Eingabe der Ziffern und/oder Buchstabenkombinationen in eine Datenbank auch ohne Zuhilfenahme von Smartphones oder Scanner erfasst werden.

Bei der Anordnung des Funkchips oder des RFID-Inlay auf der Verpackungseinheit können die Funkchips bzw. RFID-Inlay von einem Kunststofffolienstück zusätzlich mechanisch geschützt werden. In dieser Ausführungsform der Erfindung können Folienstücke, welche die Funkchips bzw. RFID-Inlay aufweisen, völlig intransparent ausgeführt sein, so dass die Umrisse der Funkchips oder des RFID-Inlays von außen nicht erkennbar sind. Auch ist es möglich, derartige Funkchips bzw. RFID-Inlay mit gespeicherten Kennzeichnungscodemarken auf Innenflächen einer Verpackungseinheit zu fixieren.

In einer weiteren Ausführungsform der Erfindung ist es vorgesehen, dass die Kennzeichnungscodemarken auf Folienstücke aufgebracht sind, die ein fälschungssicheres Merkmal, vorzugsweise ein Kippfarbenmuster, ein Guillochemuster oder ein Hologramm aufweisen. Eine Verpackungskennzeichnung mit derartigen fälschungsaufwändigen Kennzeichnungscodemarken hat den Vorteil, dass sie nur in erschwerter Weise manipuliert werden kann. Somit bleibt die Originalität der durch die Verpackungskennzeichnung markierten Produkte oder Substanzen entsprechend der Lebensdauer der Produkte oder Substanzen erhalten. Diese fälschungssicheren Merkmale in Verbindung mit den Kennzeichnungscodemarken, die mit der erfindungsgemäßen Verpackungskennzeichnung von Verpackungseinheiten möglich sind, sind besonders dort von Vorteil, wenn es um den Echtheitsschutz von hochwertigen oder markengeschützten Produkten oder Substanzen wie beispielsweise Medikamenten, Chemieprodukten oder Lebensmitteln geht, bei denen Leib und Leben von Mensch und/oder Tier gefährdet sind, da nur dadurch eine wirkliche 100%ige Echtheitsverifizierung möglich ist.

Ein weiterer Aspekt betrifft eine Kennzeichnungsvorrichtung für ein Kennzeichnen einer Verpackungseinheit mit einer Verpackungskennzeichnung. Die Kennzeichnungsvorrichtung kann eine Zuführung zu einem geschlossenen Bereich der ungekennzeichneten Verpackungseinheiten aufweisen, während die Kennzeichnungscodemarken ausschließlich innerhalb des geschlossenen Bereichs zur Verfügung stehen, auf die Verpackungseinheit aufgebracht und dort auch erstmalig gescannt oder ausgelesen und der zentralen Datenbank zugeführt werden. Ein derartiger geschlossener Bereich wird auch Tunnel oder Etikettiertunnel genannt. Dieser geschlossene Bereich hat den Vorteil, dass kein unbefugter Zugriff auf Kennzeichnungscodemarken möglich ist und nach dem Etikettiervorgang im Tunnel lediglich mit Verpackungseinheit und in Bezug auf die offene Kennzeichnungscodemarke für Dritte zugänglich ist.

Im Bereich der Kennzeichnungsposition des Tunnels kann bei Kunststoffverpackungseinheiten eine Heizvorrichtung angeordnet sein, wenn nicht die Kunststoffverpackungseinheit bereits mit einer entsprechenden Aufheiztemperatur der Kennzeichnungsvorrichtung zugeführt wird. Bei Kunststoffverpackungseinheiten kann eine derartige Heizvorrichtung mindestens lokal einen Außenflächenbereich der Kunststoffverpackungseinheit aufheizen. Bei Zelluloseverpackungseinheiten können die Kennzeichnungscodemarken auf eine einseitig klebende Folie aufgedruckt sein oder mittels Stempeldruck direkt auf die Zelluloseverpackungseinheiten in dem Tunnel aufgedruckt werden.

Ein Applikator weist zum Aufbringen der Kennzeichnungscodemarken eine Zufuhrfläche für einen Etikettierstreifen auf, der aus einem Trägerfolienstreifen und aufgeklebten Kunststofffolienstücken mit innen- und/oder außenseitig angeordneten Kennzeichnungscodemarken besteht. Ferner weist die Kennzeichnungsvorrichtung eine Trenneinrichtung auf, die im Bereich der Kennzeichnungsposition angeordnet ist und eine Trennkannte aufweist.

Diese Trennkante ermöglicht es, die Kunststofffolienstücke von dem Trägerfolienstreifen zu trennen, bevor ein Ein- oder Aufschmelzen der Kunststofffolienstücke oder ein Aufkleben der Folienstücke mit innen- und/oder außenseitig angeordneten Kennzeichnungscodemarken auf einen vorgesehenen Außenflächenbereich der zu kennzeichnenden Verpackungseinheit erfolgt. Ferner ist eine Andruckvorrichtung in der Kennzeichnungsvorrichtung vorgesehen, die im Bereich der Kennzeichnungsposition angeordnet ist. Die Andruckvorrichtung wirkt auf die Außerfläche des Folienstücks beim Ein- oder Aufschmelzen desselben in oder auf einen vorgeheizten Außenflächenbereich des Kunststoffgegenstands oder beim Aufkleben des Folienstückes mit den Kennzeichnungscodemarken auf eine Zelluloseverpackungseinheit.

Mit einer derartigen Kennzeichnungsvorrichtung ist es möglich, die Folienstücke mit den Kennzeichnungscodemarken mittels eines handelsüblichen Etikettenspenders auf den vorgesehenen Außenflächenbereich des Gegenstands zu applizieren. Dabei kann eine derartige Verspendung auch direkt in einem Produktionsablauf eingegliedert werden. Hierdurch kann ein Kennzeichnungsprozess im Vergleich zu einer normalen Stapelapplikation von Etiketten, bei der Etiketten von einem Stapel mit einem Greifer einzeln in ein Werkzeug eingelegt werden, deutlich vereinfacht und vor allem um ein Mehrfaches beschleunigt werden.

Mithilfe der Kennzeichnungsvorrichtung können schließlich Spendezeiten erreicht werden, welche auch bei einer Etikettierung von Produkten erreichbar sind, wie beispielsweise in pharmazeutischen oder Lebensmittelbefüllungsanlagen, wobei die Kennzeichnungsvorrichtung stromaufwärts einer eigentlichen Befüllungsstation der Verpackungseinheit angeordnet sein kann.

In vorteilhafter Weise liefert die Kennzeichnungsvorrichtung deutliche Logistikvorteile, da jede Verpackungseinheit in einer Befüllungsstation zu relativ niedrigen Kosten mittels der Kennzeichnungscodemarken identifiziert und auf Echtheit überprüft werden kann, und zwar sowohl bei der Herstellung der Verpackungseinheit als auch beim Befüllen der Verpackungseinheit wie auch bei der Chargenerkennung und bei Reklamationen gefälschter Kennzeichnungscodemarken. Insbesondere kann die Kennzeichnungsvorrichtung auch zum Kennzeichnen von Mehrweg PET (Polyethylenterephthalat) Verpackungseinheiten sowie für die Produktverfolgung und für Reklamationen eingesetzt werden. Darüber hinaus ist es von Vorteil, die Verpackungskennzeichnung bei Verpackungseinheiten für den industriellen Bereich, insbesondere im Chemiebereich sowie für Spritzmittel oder für hochwertige und zu schützende Konsumgüter wie Lebensmittel einzusetzen. Insbesondere ist die erfindungsgemäße Verpackungskennzeichnung mithilfe der Kennzeichnungscodemarken in dem Pharma- und Medikamentenbereich vorteilhaft einsetzbar.

Die hohe Appliziergeschwindigkeit von erfindungsgemäßen Kennzeichnungscodemarken wird nicht zuletzt aufgrund eines erfindungsgemäßen Etikettenstreifens erreicht, der in der Kennzeichnungsvorrichtung wie oben erörtert einsetzbar ist.

Ein weiterer Aspekt betrifft deshalb einen Etikettierstreifen, der einen Trägerfolienstreifen mit einseitiger Klebstoffbeschichtung aufweist. Die Klebstoffbeschichtung ist derart beschaffen, dass sie adhäsiv Kunststofffolienstücke mit aufgebrachten Kennzeichnungscodemarken aufnehmen und in der Kennzeichnungsvorrichtung problemlos freigeben kann. Dazu sind auf der Klebstoffbeschichtung des Trägerfolienstreifens Kunststofffolienstücke angeordnet und weisen eine Innenfläche und eine Außenfläche auf. Die Innenfläche der Kunststofffolienstücke ist über die Klebstoffbeschichtung mit dem Trägerfolienstreifen verbunden, wobei jeweils eine Kennzeichnungscodemarke einer zu kennzeichnenden Verpackungseinheit auf der Innenfläche und/oder der Außenfläche des Kunststofffolienstücks angeordnet sein kann.

Dazu kann die Kennzeichnungscodemarke einen Aufdruck aufweisen, der spiegelbildlich auf der Innenfläche des Kunststofffolienstücks angeordnet ist, insbesondere dann, wenn dieser Aufdruck von der Außenfläche des Kunststofffolienstücks aus zu identifizieren ist. Das setzt voraus, dass vorzugsweise das Kunststofffolienstück aus einem transparenten Material aufgebaut ist, wie vorzugsweise einem HDPE oder einem PP Material. Ein derartiger spiegelbildlicher Aufdruck einer Kennzeichnungscodemarke kann einen Barcodeaufdruck oder einen Datamatrixcodeaufdruck aufweisen.

Außerdem ist es möglich, auf der Innenfläche des Kunststofffolienstückes des Etikettierstreifens einen Funkchip oder ein RFID-Inlay (Radio Frequency Identification Inlay) vorzusehen, wobei in diesem Fall das Kunststofffolienstück des Etikettierstreifens intransparent sein kann. Sowohl die Kennzeichnungscodemarken als auch das Kunststofffolienstück des Etikettierstreifens können zusätzliche fälschungssichere Merkmale aufweisen, wie sie bereits oben erörtert wurden.

Mit einem derartigen Etikettierstreifen wird ein Verfahren zur Verpackungskennzeichnung von Verpackungseinheiten wesentlich vereinfacht und eine niedrige Taktzeit für den Aufbringvorgang eines Kunststofffolienstückes mit Kennzeichnungscodemarken erreicht, wobei der Kennzeichnungsvorgang um ein Vielfaches schneller erfolgen kann als bei herkömmlichen Stapelapplikationen von Etiketten.

Darüber hinaus wird durch die Selbstklebeeigenschaften eines Trägerpapiers des Trägerfolienstreifens auch eine Etikettierstreifenrolle, auf welcher sich die ausgestanzten Kunststofffolienstücke mit innen- und/oder außenseitig angeordneten Kennzeichnungscodemarken befinden, während des Applizierens auf der Verpackungseinheit in der Kennzeichnungsvorrichtung stabil gehalten. Ein herkömmliches sogenanntes Teleskopieren wird dadurch vermieden. Da ein überwiegender Teil der ausgestanzten Kunststofffolienstücke in kleinen Formaten ausgebildet sein wird, erweist sich die hohe Stabilität der Etikettierstreifenrolle als zusätzlicher Vorteil.

Ein weiterer Aspekt der Erfindung betrifft ein Verfahren mit Kennzeichnung einer Verpackung zur Verifizierung eines verpackten Produktes weist nachfolgende Verfahrensschritte auf. Zunächst werden für Verpackungen von vor Fälschungen zu schützenden Substanzen oder Produkten ein erster Datensatz und ein dem ersten Datensatz zugeordneter zweiter Datensatz generiert und gespeichert. Auf der Basis einer Liste von derartig einander zugeordneten ersten und zweiten Datensätzen werden mindestens eine erste Kennzeichnungscodemarke, die offen auf einer Verpackungseinheit anzuordnen ist, und eine zweite Kennzeichnungscodemarke zum verdeckten Anordnen auf der Verpackungseinheit hergestellt. Danach werden erste und jeweils zugeordnete zweite Kennzeichnungscodemarken entsprechend auf einer Verpackungseinheit angeordnet. Dann erfolgt ein erstmaliges Scannen der mindestens ersten und der zweiten Kennzeichnungscodemarken vor einem Verdecken der mindestens zweiten Kennzeichnungscodemarke zur Aktualisierung der Liste in einem Rechner gespeichert und stehen einer Echtheitsprüfung zur Verfügung. Dazu werden bei einem erneuten Scannen der Kennzeichnungscodemarken bei einem weiteren Handhaben der Produkte in den Verpackungseinheiten die dabei gescannten Datensätze mit den gespeicherten Datensätzen der aktualisierten Liste verglichen und gefälschte erste und/oder zweite Kennzeichnungscodemarken erfasst und Substanzen oder Produkte in den Verpackungen mit gefälschten ersten und/oder zweiten Kennzeichnungscodemarken als Fälschungen identifiziert.

Darüber hinaus ist es auch möglich für das erstmalige Scannen die zwei verschiedenen einander zugeordneten mit fortlaufenden Nummern oder Buchstabenfolgen versehenen Kennzeichnungscodemarken, vorab in einer Datenbank zu generieren. Diese werden dann auf ein Etikett oder auf ein verpacktes Produkt gedruckt, wobei wie zuvor beschrieben eine Kennzeichnungscodemarke offen und die andere bereits verdeckt oder abgedeckt angebracht wird. Anschließend wird beim erstmaligen Scannen nur die offene Kennzeichnungscodemarke gescannt oder ausgelesen, und diese schaltet dann die verdeckt liegende Kennzeichnungscodemarke z.B. in der Datenbank, in der beide Kennzeichnungscodemarken generiert und hinterlegt sind, frei.

Dieses Verfahren hat den Vorteil, dass gefälschte oder nachgemachte Produkte oder Substanzen anhand der gespeicherten Datensätze der aktualisierten Liste als echt oder gefälscht bei wiederholtem Scannen der ersten und/oder zweiten Kennzeichnungscodemarke erfasst und aussortiert werden können.

In einem Durchführungsbeispiel wird das Anordnen der mindestens ersten und zweiten Kennzeichnungscodemarken auf der Verpackungseinheit und das erstmalige Scannen mindestens der ersten Kennzeichnungscodemarke zur Aktualisierung der Liste der einander zugeordneten Datensätze der zu schützenden Substanzen oder Produkte in einem geschlossenen Bereich einer Etikettieranlage erfolgen. Die Vorteile des Einsatzes eines derartigen geschlossenen Bereichs einer Etikettieranlage werden bereits oben im Detail erörtert und nicht erneut aufgelistet, wobei der geschlossene Bereich sich durch Verbesserung der Fälschungssicherheit auszeichnet.

Die Erfindung wird im Folgenden anhand der beispielhaft erläuterten Ausführungsformen näher beschrieben werden.
- Figur 1: zeigt eine schematische perspektivische auseinandergezogene Ansicht einer ersten Verpackungskennzeichnung gemäß einer ersten Ausführungsform der Erfindung.
- Figur 2: zeigt eine schematische perspektivische Ansicht einer Etikettierfolie, auf der nebeneinander eine erste und eine zweite Kennzeichnungscodemarke einer zweiten Verpackungskennzeichnung einer examplarischen Ausführungsform angeordnet sind.
- Figur 3: zeigt eine schematische perspektivische Ansicht der Etikettierfolie gemäß Figur 2 mit einer über der zweiten Kennzeichnungscodemarke vorgesehenen intransparenten und verdeckenden Abziehfolie.
- Figur 4: zeigt eine schematische perspektivische auseinandergezogene Ansicht einer Verpackungskennzeichnung gemäß einer exemplarischen Ausführungsform.
- Figur 5: zeigt eine schematische perspektivische auseinandergezogene Ansicht einer Verpackungskennzeichnung gemäß einer exemplarischen Ausführungsform.
- Figur 6: zeigt eine schematische perspektivische auseinandergezogene Ansicht einer Verpackungskennzeichnung gemäß einer exemplarischen Ausführungsform.
- Figur 7: zeigt schematisch einen Ausschnitt einer Oberfläche einer Verpackungseinheit mit aufgebrachter offener erster Kennzeichnungscodemarke und freigerubbelter zweiter Kennzeichnungscodemarke.
- Figur 8: zeigt ein Flussdiagramm eines Verfahrens mit Kennzeichnung einer Verpackung zur Verifizierung eines verpackten Produktes.
- Figur 9: zeigt ein Flussdiagramm eines Verfahrens mit Etikettierung einer Lebensmittelverpackungseinheit zur Echtheitsprüfung des verpackten Lebensmittels.
- Figur 10: zeigt ein Flussdiagramm eines Verfahrens mit Etikettierung einer Medikamentenverpackungseinheit zur Echtheitsprüfung des Medikaments.
- Figur 11: zeigt Prüfschritte und Hinweisblöcke einer Arzneimittelechtheitsprüfung.
- Figur 12: zeigt eine beidseitig zu öffnende Artzneimittelfaltschachtel mit mehr als einer ersten Kennzeichnungscodemarke.

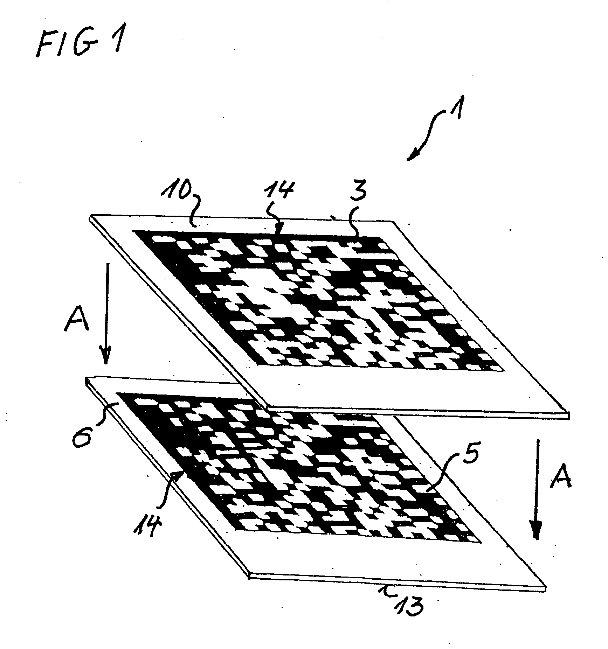

Figur 1 zeigt eine schematische perspektivische auseinandergezogene Ansicht einer ersten Verpackungskennzeichnung 1 gemäß einer ersten Ausführungsform der Erfindung. Die Verpackungskennzeichnung 1 wird zur Verifizierung der Echtheit des in der Verpackungseinheit enthaltenen Produktes oder der dort enthaltenen Substanzen verwendet. In dieser Ausführungsform wird zur Codierung der Kennzeichnungscodemarken ein Datenmatrixcode 14 eingesetzt. Die hier gezeigte erste Kennzeichnungscodemarke 3 kann in Pfeilrichtung A auf die zweite Kennzeichnungscodemarke 5 zur Verdeckung derselben und zum Ausbilden einer Verpackungskennzeichnung 1 aufgebracht werden.

In dieser ersten Ausführungsform werden zwei übereinander angeordneten Kennzeichnungscodemarken 3 bzw. 5 als Verpackungskennzeichnung 1 verwendet, wobei die zweite Kennzeichnungscodemarke 5 auf eine Trägerfolie gedruckt ist, die auf ihrer Rückseite 13 eine Klebstoffschicht aufweist, über die sie mit einem Oberflächenbereich der Verpackungseinheit 4 stoffschlüssig verbunden ist. Zur Ausbildung der Verpackungskennzeichnung 1 kann dann die erste Kennzeichnungscodemarke 3, die auf einem Kunststofffolienstück aufgedruckt ist, adhäsiv auf der zweiten Kennzeichnungscodemarke 5 in Pfeilrichtung A aufgebracht sein.

Dazu kann in der Ausführungsform gemäß Figur 1 die erste Kennzeichnungscodemarke 3 als Rubbelschicht auf ein transparentes Kunststofffolienstück aufgebracht sein., Die darunter angeordnete zweite Kennzeichnungscodemarke 5 kann durch Rubbeln und Zerstören der ersten Kennzeichnungscodemarke 3 freigelegt werden. Eine gestaffelte Überprüfung einer Echtheit der Verpackung bzw. des in der Verpackung enthaltenen Produktes oder der in der Verpackung enthaltenen Substanz kann durch Vergleich mit Datensätzen, die in einer zentralen Datenbank vor dem Aufbringen der Kennzeichnungscodemarken gespeichert sind, durchgeführt werden. Stimmen die Datensätze der ersten und der zweiten Kennzeichnungscodemarken mit den gespeicherten Datensätzen nicht überein, ergibt sich eindeutig, dass in der Verpackungseinheit ein gefälschtes Produkt verpackt ist, da die Kennzeichnungscodemarken eindeutig gefälscht wurden.

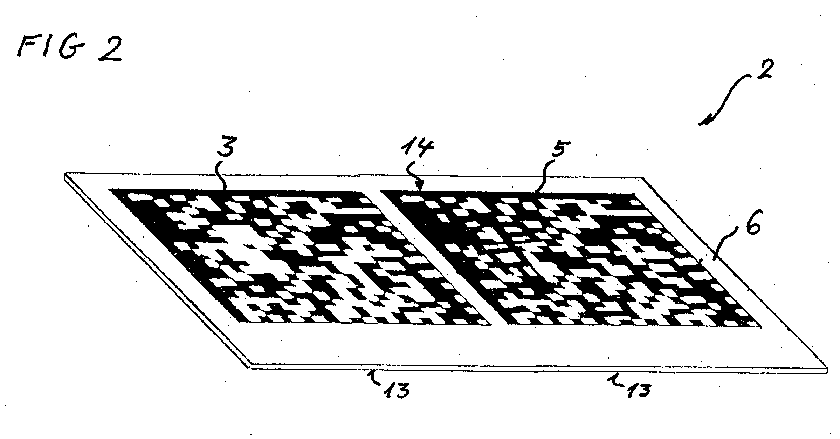

Figur 2 zeigt eine schematische perspektivische Ansicht einer Etikettierfolie 6, auf der nebeneinander eine erste und eine zweite Kennzeichnungscodemarke 3 bzw. 5 einer zweiten Verpackungskennzeichnung 2 einer exemplarischen Ausführungsform angeordnet sind. Wie Figur 2 zeigt, sind die nebeneinander angeordneten ersten und zweiten Kennzeichnungscodemarken 3 und 5 auf der Etikettierfolie 6 mit zugehörigen unterschiedlichen Datensätzen ausgestattet, so dass die Fälschungssicherheit weiter erhöht werden kann gegenüber Muli-Code Etiketten, die identische erste und zweite Kennzeichnungscodemarken aufweisen.

Wenn die Verpackungseinheit eine Kunststoffverpackungseinheit aus einem Thermoplast ist, besteht außerdem die Möglichkeit, anstelle einer Klebstoffschicht auf der Rückseite 13 der Etikettierfolie 6 eine anschmelzende Etikettierfolie 6 auf die Oberseite der Kunststoffverpackungseinheit vorzusehen, so dass ein Abziehen und Kopieren der Kennzeichnungscodemarken zu Fälschungszwecken deutlich erschwert ist.

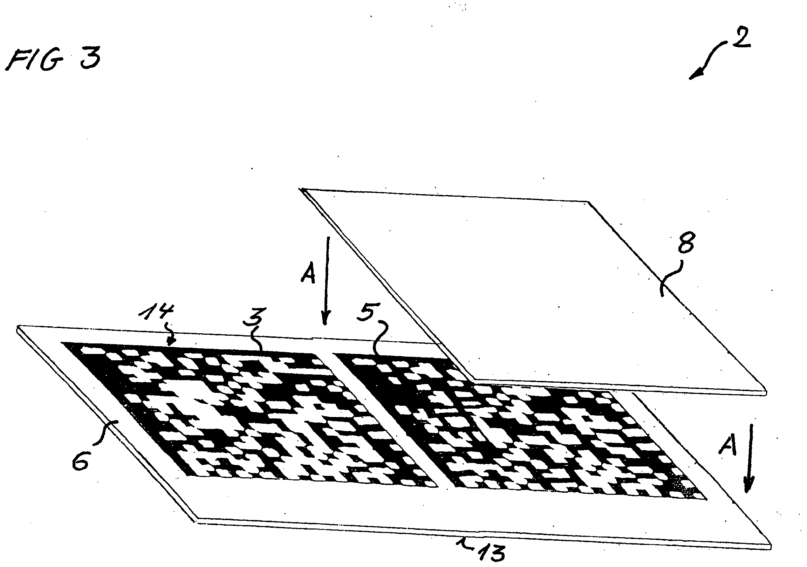

Figur 3 zeigt eine schematische perspektivische Ansicht der Etikettierfolie 6 gemäß Figur 2 mit einer über der zweiten Kennzeichnungscodemarke 5 vorgesehenen intransparenten und verdeckenden Abziehfolie 8. Diese kann in Pfeilrichtung A auf die zweite Kennzeichnungscodemarke 5 aufgeklebt werden, so dass lediglich die erste Kennzeichnungscodemarke offen und zugänglich bleibt. Erst nach Abziehen der Abziehfolie ist es möglich, auf die zweite Kennzeichnungscodemarke zuzugreifen, wobei im Gegensatz zur Ausführungsform der Figur 1 die erste Kennzeichnungscodemarke 3 weder zerstört noch beschädigt wird.

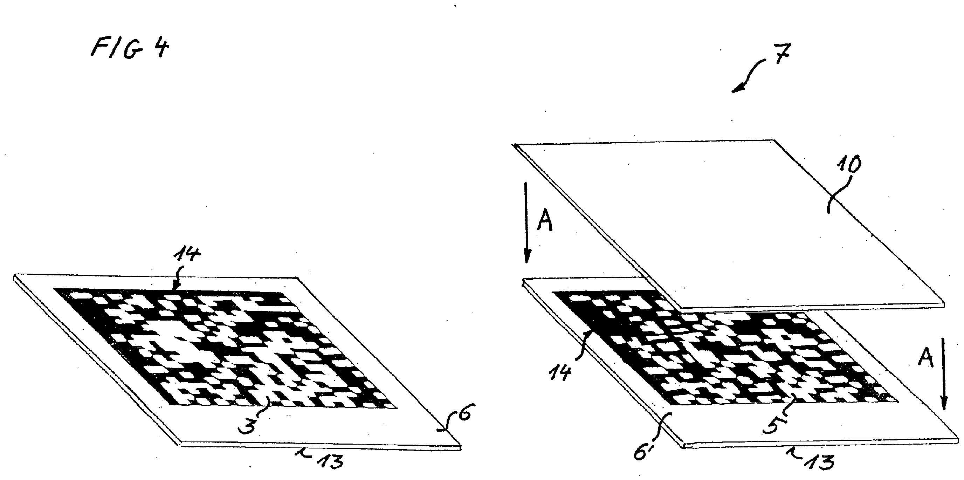

Figur 4 zeigt eine schematische perspektivische auseinandergezogene Ansicht einer Verpackungskennzeichnung 7 gemäß einer exemplarischen Ausführungsform, bei der die erste Kennzeichnungscodemarke 3 auf einer ersten Etikettierfolie 6 angeordnet ist und beabstandet von der ersten Etikettierfolie 6 eine zweite Etikettierfolie 6' mit der zweiten Kennzeichnungscodemarke 5 auf der Verpackungseinheit aus Kunststoff angeordnet ist. Über dieser zweiten Kennzeichnungscodemarke 5 ist wiederum eine intransparente Rubbelfolie 10 jedoch ohne einen Aufdruck der ersten Kennzeichnungscodemarke angeordnet, welche die darunter angeordnete zweite Kennzeichnungscodemarke verdeckt. Unter Rubbelfolie 10 wird in diesem Zusammenhang eine transparente Folie verstanden, die eine intransparente Farbbeschichtung aufweist, die durch Rubbeln entfernt werden kann, um die zweite Kennzeichnungscodemarke freizulegen.

Dabei kann die Farbe der intransparenten Beschichtung der Rubbelfolie 10 an die Farbe der Oberfläche der Verpackungseinheit angepasst sein, um den Ort der zweiten Kennzeichnungscodemarke zu verbergen. Andererseits ist es auch möglich, die zweite Kennzeichnungscodemarke mit bedeckender intransparenter Rubbelfolie 10 auf einer Innenfläche der Verpackungseinheit aufzubringen, was jedoch bedeutet, dass dazu die Verpackungseinheit zumindest teilweise geöffnet werden muss, wenn es sich bei der Codierung um einen Barcode- oder Datenmatrixcodeaufdruck handelt. Ein derartiges Öffnen einer Verpackungseinheit zur Echtheitsüberprüfung eines in einer Verpackungseinheit verpackten Produktes oder einer Substanz kann jedoch entfallen, mindestens die auf einer Innenwandung der Verpackung angeordnete Kennzeichnungscodemarke einen Funkchip oder einen RFID-Inlay (Radio Frequency Identification Inlay) aufweist. Durch derartige Funkchips oder RFID-Inlay in Verpackungseinheiten kann die Sicherheit vor Raubkopien der Kennzeichnungscodemarke 3 und/oder 5 weiter verbessert werden.

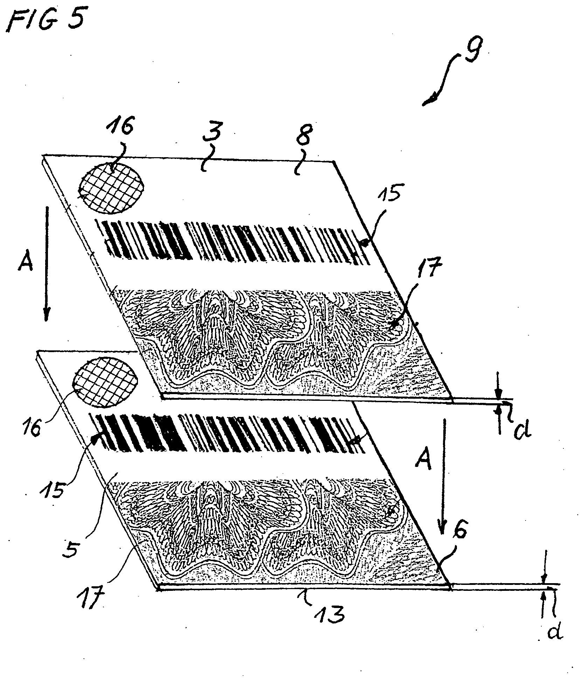

Figur 5 zeigt eine schematische perspektivische auseinandergezogene Ansicht einer Verpackungskennzeichnung 9 gemäß einer exemplarischen Ausführungsform. Bei dieser Ausführungsform ist ein offener Balkencode auf einem sichtbaren oberen Folienstück 18 aufgebracht, wobei neben dem Aufdruck des Balkencodes 15 das Folienstück 18 weitere fälschungssichere Muster aufweist, wie beispielsweise ein Kippfarbenmuster 16 und ein Guillochemuster 17. Die Foliendicke des Folienstücks 18 liegt im Bereich von wenigen 10 *µ*m (Mikrometern). In Figur 5 ist die erste offene Kennzeichnungscodemarke 3 auf einer Abziehfolie 8 auf der zweiten verdeckten Kennzeichnungscodemarke 5 angeordnet, so dass durch Abziehen der Abziehfolie 8 mit einer Foliendicke d im Bereich von wenigen 10 *µ*m (Mikrometern) auf die zweite Kennzeichnungscodemarke 5 zugegriffen werden kann.

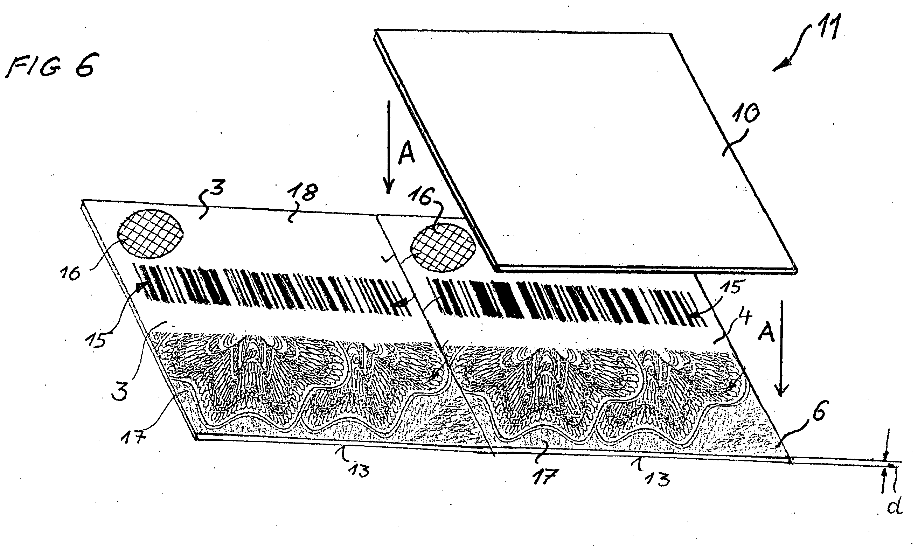

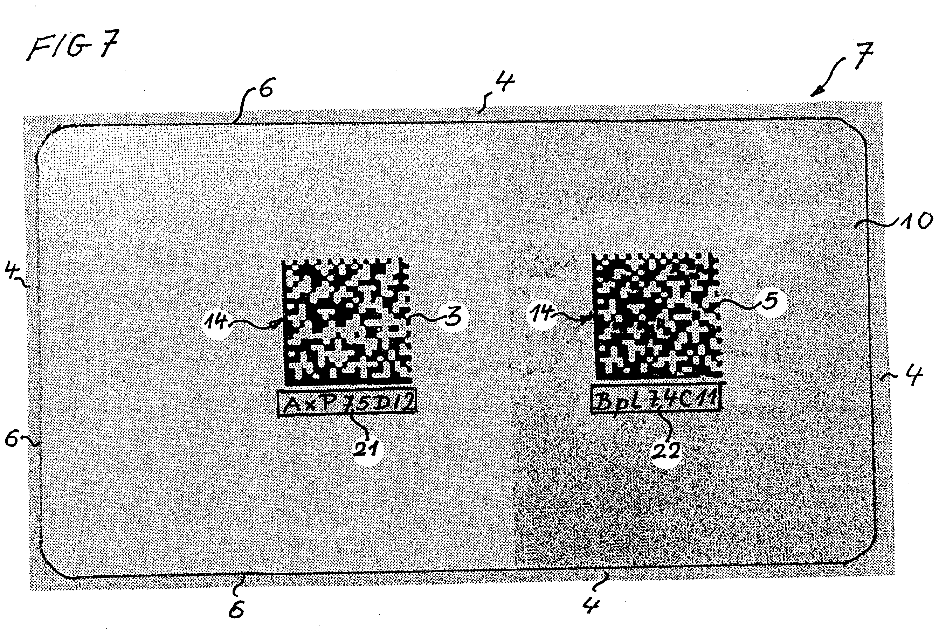

Figur 6 zeigt eine schematische perspektivische auseinandergezogene Ansicht einer Verpackungskennzeichnung 11 gemäß einer exemplarischen Ausführungsform. In dieser Ausführungsform entsprechen die Muster auf dem Folienstück 18 mit den hier nebeneinander liegenden ersten und zweiten Kennzeichnungscodemarken 3 und 5 den in Figur 5 gezeigten Mustern mit einem Barcode 15 als Codierungsform und fälschungssicheren Farbkippmustem 16 sowie Guillochemuster 17, wie sie bereits in Figur 5 gezeigt wurden. Der Unterschied besteht lediglich darin, dass bei einem Zugriff auf die zweite Kennzeichnungscodemarke 5 die erste Kennzeichnungscodemarke 3 nicht abgezogen werden muss, sondern dass die erste Kennzeichnungscodemarke 3 offen und unzerstört auf der Verpackungseinheit beibehalten wird. Als Abdeckung der zweiten Kennzeichnungscodemarke 5 ist wiederum eine transparente Folie mit intransparenter Rubbelschicht als Rubbelfolie 10 vorgesehen. Ein Beispiel für ein Freilegen durch Rubbeln einer zweiten Kennzeichnungscodemarke wird in der nachfolgenden Figur 7 gezeigt.

Figur 7 zeigt schematisch einen Ausschnitt einer Oberfläche einer Verpackungseinheit 4 mit aufgebrachter offener erster Kennzeichnungscodemarke 3 und freigerubbelter zweiter Kennzeichnungscodemarke 5, die unter einer Rubbelfolie 10 zunächst verdeckt und verborgen war. Sowohl die erste als auch die zweite Kennzeichnungscodemarke basieren auf einem Datenmatrixcode 14 und sind, wenn auch beabstandet, auf einer gemeinsamen einseitig klebenden Etikettierfolie 6 angeordnet. Ferner sind die erste offene und die zweite verdeckte Kennzeichnungscodemarken 3 und 5 mit zusätzlichen die Sicherheit erhöhenden Ziffern- und Buchstabenkombinationen 21 und 22 versehen.

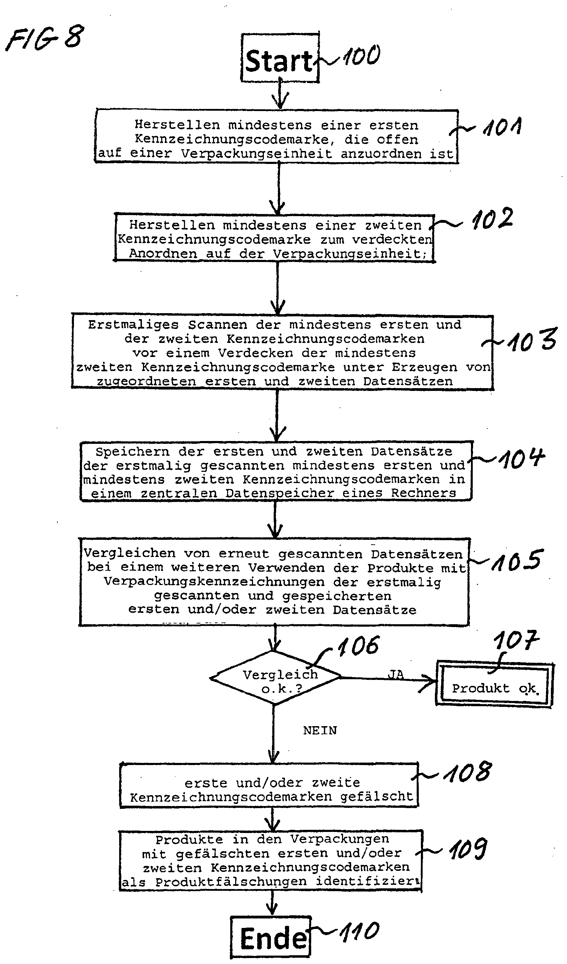

Figur 8 zeigt ein Flussdiagramm eines Verfahrens mit Kennzeichnung einer Verpackung zur Verifizierung der Echtheit eines verpackten Produktes. Nach dem Startschritt 100 des Flussdiagramms des Verfahrens mit Kennzeichnung einer Verpackung wird zunächst in einem Schritt 101 ein Herstellen mindestens einer ersten Kennzeichnungscodemarke, die offen auf einer Verpackungseinheit anzuordnen ist, durchgeführt. Parallel oder nachfolgend kann der Schritt 102 erfolgen, bei dem ein Herstellen mindestens einer zweiten Kennzeichnungscodemarke zum verdeckten Anordnen derselben auf der Verpackungseinheit erfolgt. Nachdem die Anordnung der ersten Kennzeichnungscodemarke und der zweiten Kennzeichnungscodemarke auf der Verpackungseinheit in den Schritten 101 und 102 erfolgt ist, kann mit dem Verfahrensschritt 103 ein erstmaliges Scannen der mindestens ersten und/oder der mindestens zweiten Kennzeichnungscodemarken erfolgen. Nach dem erstmaligen Scannen in dem Verfahrensschritt 103 folgt in dem Schritt 104 ein Aktualisieren einer Liste von gespeicherten ersten und zweiten Datensätzen mit Hilfe der erstmalig gescannten mindestens ersten und mindestens zweiten Kennzeichnungscodemarken in einer zentralen Datenbank.

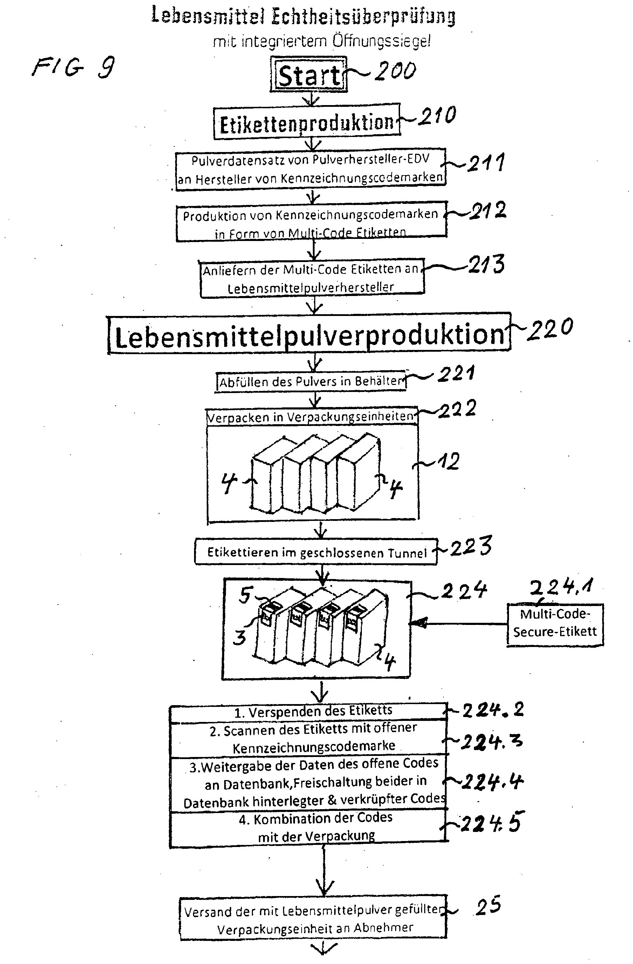

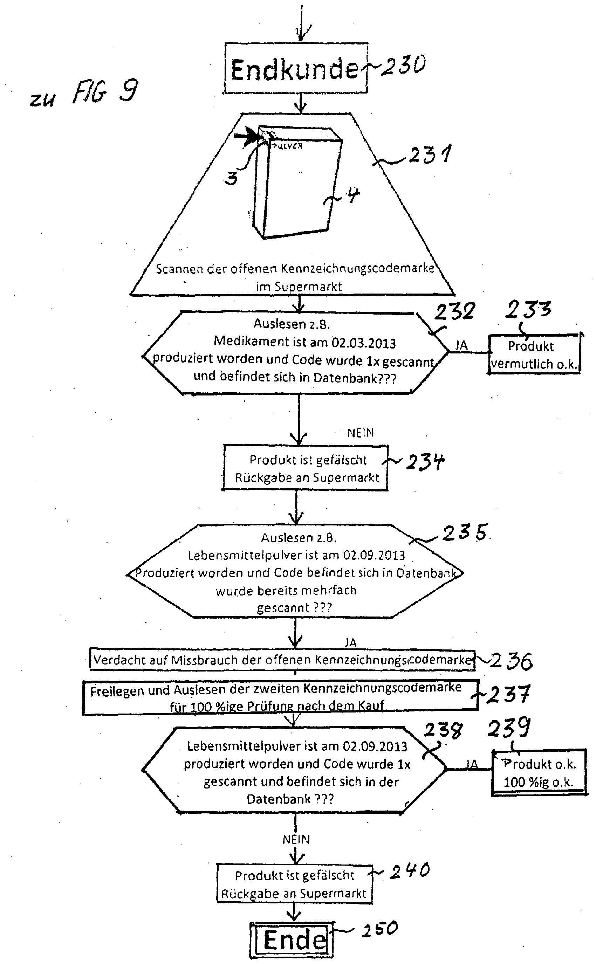

Mit dem nachfolgenden Schritt 105 erfolgt ein Vergleichen von erneut gescannten Datensätzen bei einem weiteren Verwenden der Produkte in den Verpackungseinheiten mit Verpackungskennzeichnungen der erstmalig gescannten und gespeicherten ersten und/oder zweiten Datensätze. Ist dieser Vergleich in der Entscheidungsraute des Verfahrensschritts 106 in Ordnung, so kann mit dem Verfahrensschritt 107 das Produkt als echt verifiziert werden. Ist dieser Vergleich nicht in Ordnung, dann wird im Verfahrensschritt 108 festgestellt, dass die erste und/oder die zweite Kennzeichnungscodemarke gefälscht ist und folglich kann in dem Schritt 109 festgelegt werden, dass Produkte in den Verpackungen mit gefälschten ersten und/oder zweiten Kennzeichnungscodemarken als Produktfälschungen identifiziert sind. Das Verfahren endet mit dem Schritt 110. Beispiele eines derartigen Verfahrens werden anschließend mit den Figuren 9 bis 11 im Detail erörtert.

Dazu zeigt Figur 9 ein Flussdiagramm eines Verfahrens mit Etikettierung einer Lebensmittelverpackungseinheit zur Echtheitsprüfung von Lebensmitteln, die mit dem Startschritt 200 beginnt und für eine Etikettenproduktion im Schritt 210 mehrere Verfahrensschritte 211 bis 213 durchführt. Zunächst werden im Verfahrensschritt 211 paarweise in einer Liste eindeutig zugeordnete oder verknüpfte Pulverdatensätze von einer Lebensmittelpulverhersteller-EDV an den Hersteller von Kennzeichnungscodemarken übersandt. Im Schritt 212 erfolgt dann die Produktion von Kennzeichnungscodemarken in Form von Multi-Code-Secure-Etiketten. Schließlich erfolgt im Schritt 213 das Anliefern der Multi-Code-Secure-Etiketten an den Lebensmittelpulverhersteller.

Mit dem Schritt 220 wird die Lebensmittelpulverproduktion zum Aufbringen von Kennzeichnungscodemarken in mehrere Verfahrensschritte gegliedert. Zunächst werden im Schritt 221 Lebensmittelpulver in Behälter abgefüllt. Anschließend erfolgt ein Verpacken des Lebensmittelpulvers in Verpackungseinheiten, welche die Behälter umgeben. Dieses erfolgt in einem geschlossenen Bereich 12, in dem ein Etikettieren in dem Verfahrensschritt 223 in einem geschlossenen Tunnel 224 erfolgt. In dem geschlossenen Tunnel 224 werden mit dem Schritt 224.1 Multi-Code-Secure-Etiketten zugeführt, wobei im Schritt 224.2 ein Verspenden des Etiketts erfolgt, anschließend im Schritt 224.3 ein erstmaliges Scannen des Etiketts und schließlich im Verfahrensschritt 224.4 eine Weitergabe der Daten des offenen Etiketts an eine Datenbank des Lebensmittelherstellers folgt, wobei gleichzeitig eine Freischaltung unter Erstellung einer aktualisierten Liste der paarweise verknüpften Datensätze folgt. Schließlich wird im Schritt 224.5 die Kombination der Kennzeichnungscodemarken mit der Verpackung erfolgen. Danach können die mit Lebensmitteln befüllten Verpackungseinheiten als gekennzeichnete Verpackungen den geschlossenen Tunnel verlassen und an die Abnehmer im Verfahrensschritt 225 versandt werden.

Mit dem Schritt 230 beginnt die eigentliche Echtheitsprüfung durch den Endkunden. Dem Schritt 230 folgt im Schritt 231 ein Scannen der offenen Kennzeichnungscodemarke, beispielsweise im Supermarkt. Dabei kann in einem Schritt 232 zum Beispiel ein Auslesen des Lebensmittelpulvers mit der Information erfolgen, dass das Lebensmittelpulver am 2. September 2013 produziert worden ist und der erste und/oder zweite Kennzeichnungscode nun erstmalig im Supermarkt gescannt wurde und nun zu entscheiden ist, ob sich zugehörige Datensätze in einer zentralen Datenbank befinden. Wenn das der Fall ist, ist auch das Produkt in Ordnung, was mit dem Verfahrensschritt 233 festgestellt wird.

Sind die ersten und/oder zweiten Kennzeichnungscodemarken nicht in der Datenbank zu finden, wird im Schritt 234 festgestellt, dass das Produkt gefälscht ist und eine Rückgabe an den Supermarkt zu erfolgen hat. Im Schritt 235 kann andererseits auch festgestellt werden, dass zwar der Code in der Datenbank vorhanden ist, er jedoch bereits vielfach gescannt wurde. Dieses legt in dem Schritt 236 nahe, dass ein Missbrauch der offenen Kennzeichnungscodemarke vorliegt, so dass im Schritt 237 ein Freilegen und Auslesen der zweiten Kennzeichnungscodemarke erfolgen muss.

Dabei ist auch hier im Schritt 238 zunächst die Frage offen, ob sich die zweite Kennzeichnungscodemarke, die nun einmal gescannt wurde, in der Datenbank befindet oder nicht. Wenn sie sich in der Datenbank befindet, kann das Flussdiagramm auf den Schritt 239 übergehen, bei dem bestätigt wird, dass das Produkt echt ist. Ist das jedoch nicht der Fall, wird im Verfahrensschritt 240 festgestellt, dass das Produkt gefälscht ist und eine Rückgabe an den Supermarkt erfolgen sollte. Mit dem Schritt 250 wird das Echtheitsprüfverfahren beendet.

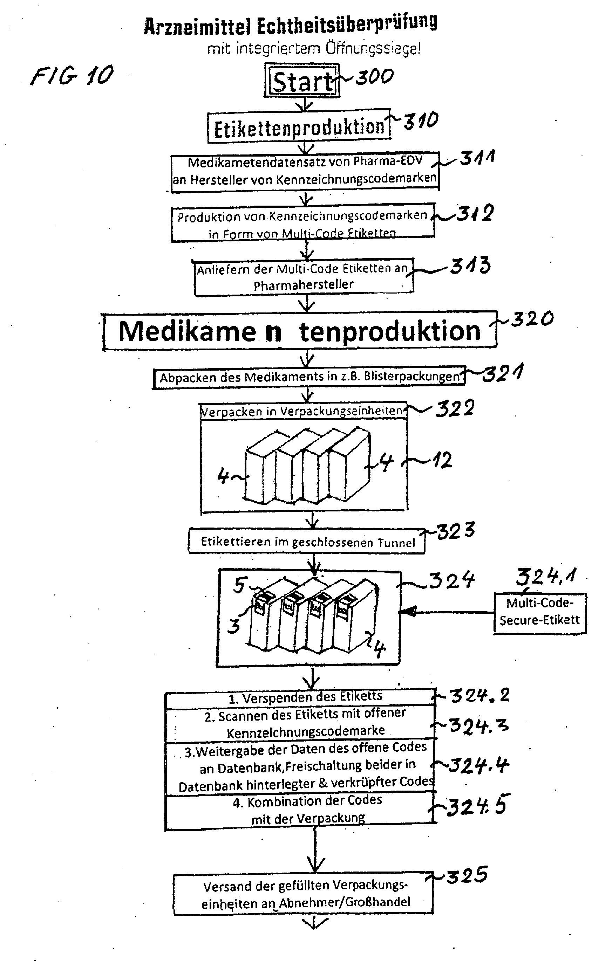

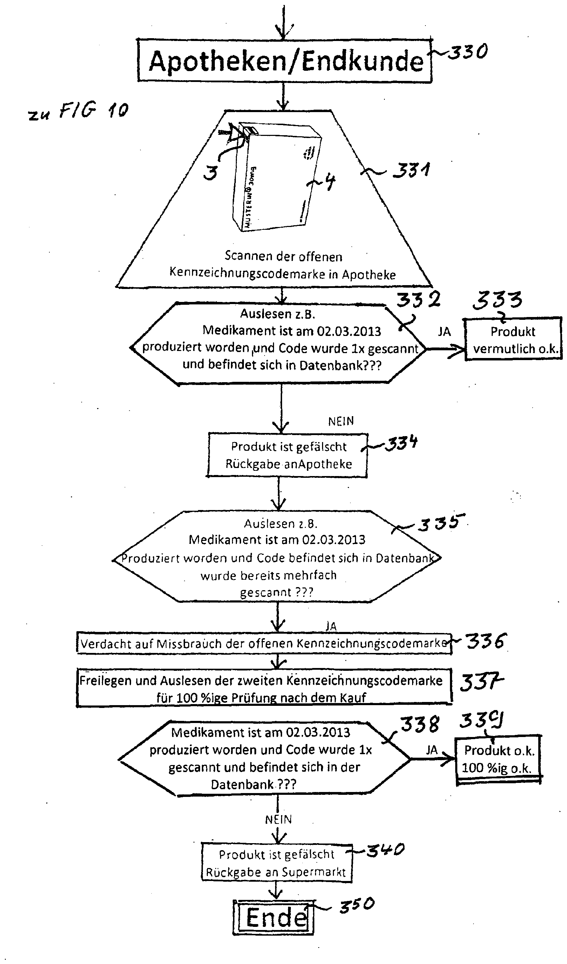

Figur 10 zeigt ein Flussdiagramm eines Verfahrens mit Etikettierung einer Medikamentenverpackungseinheit zur Echtheitsüberprüfung eines Medikaments, wobei die Echtheitsüberprüfung mit dem Startschritt 300 beginnt und für eine Etikettenproduktion im Schritt 310 mehrere Verfahrensschritte durchführt. Zunächst werden im Verfahrensschritt 311 paarweise in einer Liste eindeutig zugeordnete oder verknüpfte Medikamentendatensätze von einer Pharma-EDV des Medikamentenherstellers an den Hersteller von Kennzeichnungscodemarken übersandt. Im Schritt 312 erfolgt dann die Produktion von Kennzeichnungscodemarken in Form von Multi-Code-Secure-Etiketten. Schließlich erfolgt im Schritt 313 das Anliefern der Multi-Code-Secure-Etiketten an den Pharmahersteller des Medikaments.

Mit dem Schritt 320 wird die Medikamentenproduktion mit Aufbringen von Kennzeichnungscodemarken in mehrere Verfahrensschritte gegliedert. Zunächst werden im Schritt 321 das Medikament z.B. in Blisterpackungen abgepackt. Anschließend erfolgt ein Verpacken z. B. der Blisterpackungen in eine Verpackungseinheit, wie einen Faltkarton, welcher die Blisterpackungen umgibt. Dieses erfolgt in einem geschlossenen Bereich 12, in dem ein Etikettieren in dem Verfahrensschritt 323 in einem geschlossenen Tunnel 324 erfolgt.

In dem geschlossenen Tunnel 324 werden mit dem Schritt 324.1 dem geschlossenen Tunnel 324 Multi-Code-Secure-Etiketten zugeführt, wobei im Schritt 324.2 ein Verspenden eines Etiketts erfolgt, anschließend im Schritt 324.3 ein erstmaliges Scannen des Etiketts und schließlich im Verfahrensschritt 324.4 eine Weitergabe der Daten des offenen Etiketts für ein aktualisieren der Datenliste an die Datenbank des Pharmaherstellers und eine Freischalten folgt. Schließlich wird im Schritt 324.5 die Kombination der Kennzeichnungscodemarken mit der Verpackung erfolgen. Danach können die Verpackungseinheiten mit abgepackten Medikamenten als gekennzeichnete Verpackungen den geschlossenen Tunnel verlassen und an die Abnehmer mit dem Schritt 325 versandt werden.

Mit dem Schritt 330 beginnt die eigentliche Echtheitsprüfung durch den Endkunden oder durch die Apotheke. Es folgt der Schritt 331 mit einem Scannen der offenen Kennzeichnungscodemarke, beispielsweise in der Apotheke. Dabei kann in einem Schritt 332 zum Beispiel ein Auslesen des Medikaments erfolgen mit der Information, dass das Medikament am 2. September 2013 produziert worden ist und der erste und/oder zweite Kennzeichnungscode erstmalig durch Dritte gescannt wurde und nun zu entscheiden ist, ob sich zugehörige Datensätze in einer zentralen Datenbank befinden. Wenn das der Fall ist, ist auch das Produkt in Ordnung, was beim Schritt 333 festgestellt wird.

Sind die ersten und/oder zweiten Kennzeichnungscodemarken nicht in der Datenbank zu finden, wird im Schritt 334 festgestellt, dass das Produkt gefälscht ist und eine Rückgabe an die oder durch die Apotheke zu erfolgen hat. Im Schritt 335 kann andererseits auch festgestellt werden, dass zwar der Code in der Datenbank vorhanden ist, dass dieser jedoch bereits vielfach gescannt wurde. Dieses legt in dem Schritt 336 nahe, dass ein Missbrauch der offenen Kennzeichnungscodemarke vorliegt, so dass im Schritt 337 ein Freilegen und Auslesen der zweiten Kennzeichnungscodemarke erfolgen muss. Dabei ist auch hier im Schritt 338 zunächst die Frage, ob sich die zweite Kennzeichnungscodemarke, die einmal gescannt wurde, in der Datenbank befindet oder nicht. Wenn sie sich in der Datenbank befindet, kann das Flussdiagramm auf den Schritt 339 übergehen, bei dem bestätigt wird, dass das Produkt echt ist. Ist das jedoch nicht der Fall, wird im Schritt 340 festgestellt, dass das Produkt gefälscht ist und eine Rückgabe an die Apotheke oder durch die Apotheke an den Pharmahersteller erfolgen sollte. Mit dem Schritt 350 wird das Verfahren beendet.

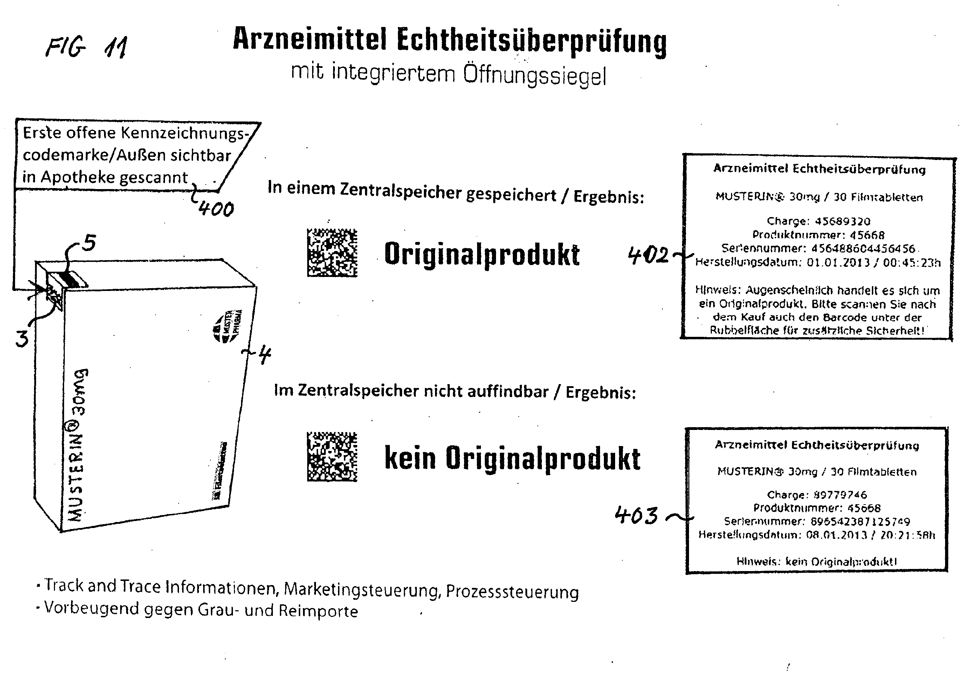

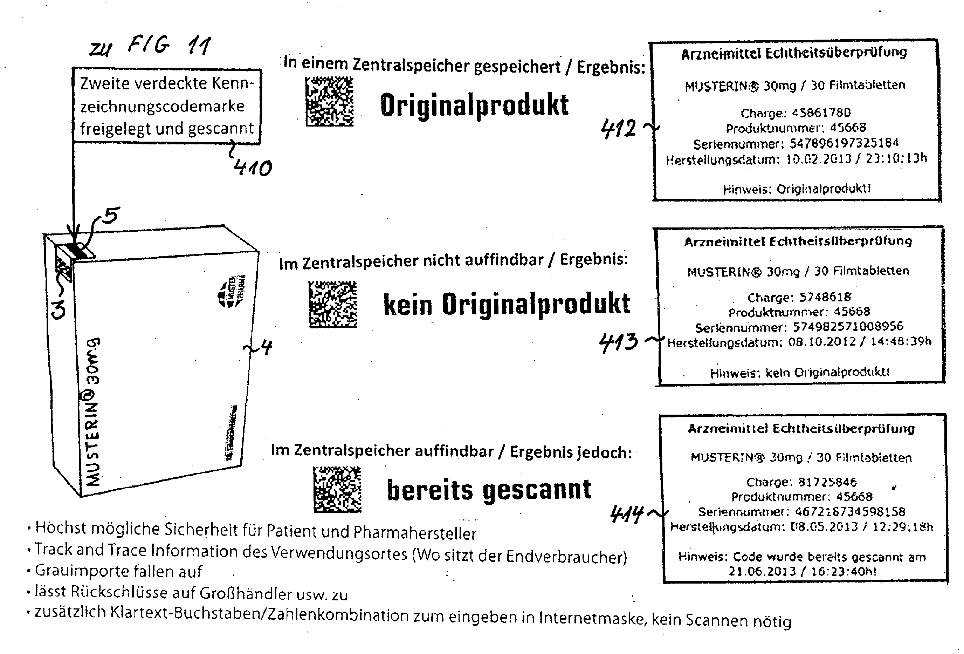

Figur 11 zeigt Prüfschritte einer Arzneimittelechtheitsprüfung. Diese Arzneimittelechtheitsprüfung beginnt zunächst mit dem Prüfschritt 400, bei dem eine erste offene Kennzeichnungscodemarke, die außen sichtbar ist, in einer Apotheke gescannt wird und mit einer in einer zentralen Datenbank gespeicherten ersten Kennzeichnungscodemarke verglichen wird. Der Vergleich kann ergeben, dass es sich um ein Originalprodukt handelt und ein Hinweisblock 402 darauf hinweist, dass es sich augenscheinlich um ein "Originalprodukt" handelt, und der Kunde oder Patient bzw. die Apotheke oder das medizinische Personal nach dem Scannen bzw. Kauf aufgefordert wird, einen verdeckten Barcode oder einen verdeckten Datenmatrixcode unter einer Rubbelfläche für eine zusätzliche Sicherheitsprüfung freizulegen. Ist jedoch diese erste offene Kennzeichnungscodemarke in der zentralen Datenbank nicht auffindbar, ergibt sich, dass das Medikament "kein Originalprodukt" ist und entsprechend wird der Hinweis 403 ausgedruckt, der auf kein Originalprodukt hinweist. Eine derartige Arzneimittelechtheitsüberprüfung hat den Vorteil, dass "Track-and-Trace"-Informationen, Marketingsteuerungsinformationen sowie Prozesssteuerungsinformationen gewonnen werden können und schließlich vorbeugend das Medikament gegen Grau- und Reimporte geschützt werden kann.

Aufgrund des Hinweises in dem Hinweisblock 403 erfolgt ein weiterer Prüfschritt 410, bei dem die zweite verdeckte Kennzeichnungscodemarke freigelegt und gescannt wird. Auch diese zweite verdeckte Kennzeichnungscodemarke wird mit einer Kennzeichnungscodemarke in einer zentralen Datenbank verglichen, wobei das Ergebnis in dem Hinweisblock 412 das verpackte Produkt als Originalprodukt kennzeichnet. Ist jedoch die zweite verdeckte Kennzeichnungscodemarke in der zentralen Datenbank nicht auffindbar, ergibt sich der Hinweis 413, dass es kein Originalprodukt sein kann. Ist die zweite verdeckte Kennzeichnungscodemarke zwar in der zentralen Datenbank auffindbar, jedoch bereits gescannt worden, wird in dem Hinweisblock 414 darauf hingewiesen, dass ein Verdacht eines Missbrauchs von Kennzeichnungscodemarken nicht ausgeschlossen ist. Mit einer derartigen Arzneimittelechtheitsüberprüfung wird eine höchst mögliche Sicherheit für den Patienten und den Pharmahersteller erreicht. Ferner können über "Track- and-Trace"-Informationen ein Verwendungsort, an dem der Endverbraucher sitzt, erfasst werden. Ferner fallen Grauimporte durch diese Echtheitsprüfmethode auf und es lassen sich Rückschlüsse auf Großhändler ziehen. Natürlich können anstelle von Barcodierungen oder Datenmatrixcodierungen insbesondere als zweite Kennzeichnungscodemarke auf der Verpackung Klartext-Buchstaben oder Zahlenkombinationen aufgedruckt sein, die unter Eingabe in eine Internetmaske eine alternative Echtheitsüberprüfung ermöglichen und somit ein Scannen einer zweiten Kennzeichnungscodemarke erübrigen.

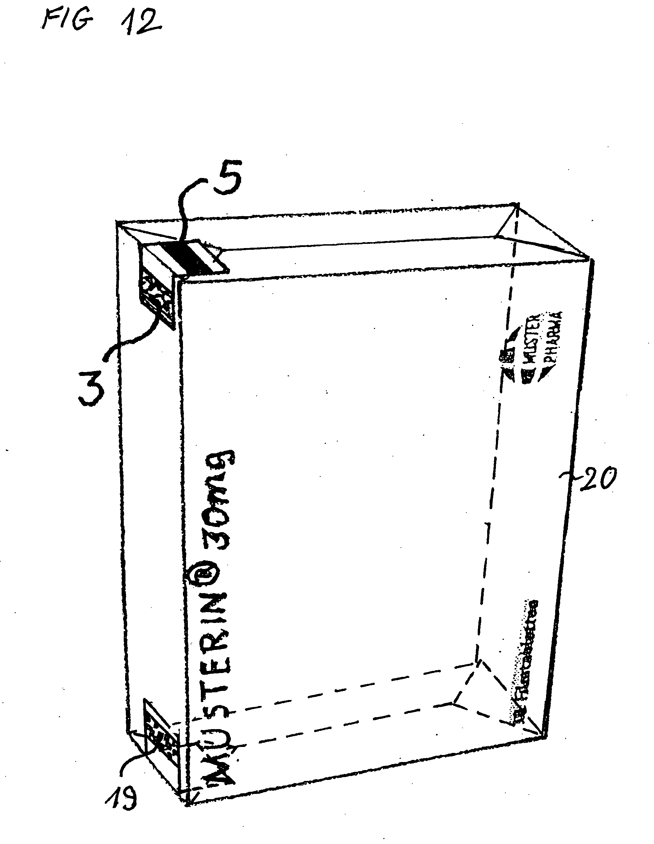

Figur 12 zeigt eine beidseitig zu öffnende Artzneimittelfaltschachtel 20 mit mehr als eine ein oberes Öffnungssiegel bildenden ersten Kennzeichnungscodemarke 3. Wenn die abgedeckte zweite Kennzeichnungscodemarke 5 eines Multi-Code-Secure-Etiketts als Masterinformation gesehen wird, können für weitere offene sichtbare Kennzeichnungscodemarken 19 nicht nur die bisher beschriebenen Ausführungsformen dienen, bei denen die erste offene Kennzeichnungscodemarke 3 fest über einen Aufdruck auf einem gemeinsamen Etikettenträger mit der zweiten Kennzeichnungscodemarke 5 verbunden sind, Vielmehr ist es auch möglich, bei z.B. beidseitig zu öffnenden Faltschachteln mindestens ein weiteres alleinstehendes und ebenfalls barcodiertes und eventuell zusätzlich mit Klartext mit Ziffern- und oder Buchstabenkombinationen versehenes Etikett über eine weitere Lasche der Faltschachtel als Öffnungssiegel zu applizieren.

Die fortlaufenden Datensätze einer derartigen weiteren offenen Kennzeichnungscodemarke 19 werden einfach und individuell generiert wie beim Aufspendevorgang beispielsweise im geschlossenen Bereich 12 und zusammen mit Informationen in der zentralen Datenbank gespeichert und verknüpft. Dadurch können nach Freilegen und Scannen der verdeckten Master-Kennzeichnungscodemarke die weiteren begleitenden ersten Kennzeichnungscodemarken ebenfalls angezeigt werden. In Figur 12 ist eine solche weitere begleitende erste Kennzeichnungscodemarke 19 über die untere Lasche der beidseitig zu öffnenden Artzneimittelfaltschachtel 20 als unteres Öffnungssiegel geklebt. Das Produkt ist somit 100%ig verifizierbar.

Obwohl zumindest beispielhafte Ausführungsformen in der vorhergehenden Beschreibung gezeigt wurden, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der Verpackungskennzeichnungen in irgendeiner Weise zu beschränken. Vielmehr stellt die vorhergehende Beschreibung dem Fachmann einen Plan zur Umsetzung zumindest einer beispielhaften Ausführungsform der Verpackungskennzeichnungen zur Verfügung, wobei zahlreiche Änderungen in der Funktion und der Konstruktion der Verpackungskennzeichnungen von in beispielhaften Ausführungsformen beschriebenen Komponenten der mehrteiligen Multi-Code-Secure-Etiketten gemacht werden können, ohne den Schutzbereich der angefügten Ansprüche und ihrer rechtlichen Äquivalente zu verlassen.

### Bezugszeichenliste

- 1: Verpackungskennzeichnung (1. Ausführungsform)
- 2: Verpackungskennzeichnung (2. Ausführungsform)
- 3: erste Kennzeichnungscodemarke
- 4: Verpackungseinheit
- 5: zweite Kennzeichnungscodemarke
- 6, 6': Etikettierfolie
- 7: Verpackungskennzeichnung (3. Ausführungsform)
- 8: Abziehfolie
- 9: Verpackungskennzeichnung (4. Ausführungsform)
- 10: Rubbelfolie
- 11: Verpackungskennzeichnung (5. Ausführungsform)
- 12: geschlossener Bereich
- 13: Rückseite
- 14: Datenmatrixcode
- 15: Barcode
- 16: Kippfarbenmuster
- 17: Guillochemuster
- 18: Folienstück
- 19: weitere offene Kennzeichnungscodemarke
- 20: beidseitig zu öffnenden Artzneimittelfaltschachtel 20
- 21: Ziffern- und Buchstabenkombination
- 22: Ziffern- und Buchstabenkombination

- 100: Startschritt
- 101-102: Verfahrensschritte zur Etikettenproduktion
- 103-105: Verfahrensschritte zum Vergleichen von Datensätzen
- 106: Entscheidungsblock
- 107-109: Hinweisblöcke
- 110: Endschritt

- 200: Startschritt
- 210-213: Verfahrensschritte zur Etikettenproduktion
- 220-225: Verfahrensschritte zur Lebensmittelpulverproduktion
- 224.1-224.5: Verfahrensschritte im geschlossenen Tunnel
- 230-240: Schritte zur Echtheitsprüfung durch Kunden
- 250: Endschritt

- 300: Startschritt
- 310-325: Verfahrensschritte zur Etikettenproduktion
- 320-325: Verfahrensschritte zur Medikamentenproduktion
- 324.1-324.5: Verfahrensschritte im geschlossenen Tunnel
- 330-340: Schritte zur Echtheitsprüfung durch Kunden/Apotheke
- 350: Endschritt

- 400: Echtheitsprüfungsschritt
- 402-403: Hinweisblöcke
- 410: Echtheitsprüfungsschritt
- 412-414: Hinweisblöcke

- A: Pfeilrichtung
- d: Foliendicke

## Patentansprüche

1. Verpackungseinheit umfassend:
mindestens eine erste Kennzeichnungscodemarke (3), die offen auf der Verpackungseinheit (4) angeordnet ist, und
mindestens eine zweite Kennzeichnungscodemarke (5), die verdeckt auf der Verpackungseinheit (4) angeordnet ist,
wobei ein erster Datensatz zugeordnet der mindestens ersten Kennzeichnungscodemarke (3) und ein zweiter Datensatz zugeordnet der mindestens zweiten Kennzeichnungscodemarke (5) in zumindest einer zentralen Datenbank abrufbar erfasst sind, und
wobei der jeweils zweiter Datensatz dem jeweils ersten Datensatz eindeutig zugeordnet ist,
wobei die mindestens erste Kennzeichnungscodemarke (3) und die mindestens zweite Kennzeichnungscodemarke (5) übereinander auf der Verpackungseinheit (4) angeordnet sind **dadurch gekennzeichnet, dass** die unter der ersten angeordnete zweite Kennzeichnungscodemarke (5)unter Zerstörung der ersten Kennzeichnungscodemarke (3) erreichbar ist.

2. Verpackungseinheit nach Anspruch 1, **dadurch gekennzeichnet, dass** die mindestens erste Kennzeichnungscodemarke (3) und die mindestens zweite Kennzeichnungscodemarke (5) beabstandet zueinander auf eine einseitig klebende Etikettierfolie (6) aufgedruckt sind.

3. Verpackungseinheit nach einem der Ansprüche 1 oder Anspruch 2, **dadurch gekennzeichnet, dass** die mindestens zweite Kennzeichnungscodemarke (5) von einer optisch intransparenten Abziehfolie (8) verdeckt ist.

4. Verpackungseinheit nach einem der Ansprüche 1 bis 3, **dadurch gekennzeichnet, dass** die mindestens zweite Kennzeichnungscodemarke (5) von einer optisch intransparenten Rubbelfolie (10) verdeckt ist.

5. Verpackungseinheit nach Anspruch 1, **dadurch gekennzeichnet, dass** die mindestens erste Kennzeichnungscodemarke (3) auf einer Abziehfolie (8) aufgedruckt ist.

6. Verpackungseinheit nach Anspruch 5, **dadurch gekennzeichnet, dass** die mindestens erste Kennzeichnungscodemarke (3) auf einer Rubbelfolie (10) aufgedruckt ist und die unter der ersten angeordnete zweite Kennzeichnungscodemarke (5) unter Zerstörung der ersten Kennzeichnungscodemarke (3) erreichbar ist.

7. Verpackungseinheit nach Anspruch 5 oder Anspruch 6, **dadurch gekennzeichnet, dass** die mindestens zweite Kennzeichnungscodemarke (5) auf eine einseitig klebende Etikettierfolie (6) aufgedruckt ist und von der ersten Kennzeichnungscodemarke (3) verdeckt ist.

8. Verfahren mit Kennzeichnung einer Verpackung zur Verifizierung eines verpackten Produktes, das folgende Verfahrensschritte aufweist:
- Generieren eines ersten Datensatzes für zu schützende Substanzen oder Produkte;
- Generieren eines dem ersten Datensatz zugeordneten zweiten Datensatzes der zu schützenden Substanzen oder Produkte;
- Erstellen und Speichern einer Liste der ersten und zugeordneten zweiten Datensätze;
- Herstellen von ersten Kennzeichnungscodemarken (3) auf der Basis der ersten Datensätze der Liste;
- Herstellen von den ersten zugeordneten zweiten Kennzeichnungscodemarken (5) auf der Basis der zweiten Datensätzen der Liste;
- Aufbringen einer der ersten Kennzeichnungscodemarke (3) und der zugeordneten zweiten Kennzeichnungscodemarke (5) auf eine Verpackungseinheit (4) von zu schützenden Substanzen oder Produkten;
- erstmaliges Scannen der mindestens ersten und zweiten Kennzeichnungscodemarken (3, 5) der gekennzeichneten Verpackungseinheit (4) zur Aktualisierung der Liste unter Speichern der aktualisierten Liste in einem Rechner;
- Verdecken der zweiten Kennzeichnungscodemarke (5) auf der Verpackung als Master-Kennzeichnungscodemarke eines Multi-Code-Secure-Etiketts, indem die mindestens erste Kennzeichnungscodemarke (3) und die mindestens zweite Kennzeichnungscodemarke (5) übereinander auf der Verpackungseinheit (4) angeordnet werden,
- Durchführen einer Echtheitsprüfung bei einem weiteren Handhaben der Produkte in den Verpackungseinheiten (4) unter erneutem Scannen der Kennzeichnungscodemarken (3, 5), wobei die unter der ersten angeordnete zweite Kennzeichnungscodemarke (5) unter Zerstörung der ersten Kennzeichnungscodemarke (3) erreichbar wird, und Vergleich der gescannten Datensätze mit gespeicherten Datensätzen der aktualisierten Liste, und
- Verifizieren der Kennzeichnungscodemarken (3, 5) als echt, bei Übereinstimmung und als gefälscht bei nicht Übereinstimmung;
- Identifizieren der Substanzen oder Produkte in den Verpackungseinheiten (4) mit gefälschten ersten und/oder zweiten Kennzeichnungscodemarken (3, 5) als Fälschungen.

9. Verfahren nach Anspruch 8, **dadurch gekennzeichnet, dass** das Anordnen der mindestens ersten und zweiten Kennzeichnungscodemarken (3, 5) auf der Verpackungseinheit (4) und das erstmalige Scannen derselben in einem geschlossenen Bereich (12) einer Etikettieranlage erfolgen.

10. Verfahren nach Anspruch 8 oder Anspruch 9, **dadurch gekennzeichnet, dass** als mindestens erste Kennzeichnungscodemarke (3) und/oder als mindestens zweite Kennzeichnungscodemarke (5) ein Barcodeaufdruck oder ein Datenmatrixcodeaufdruck, ein Funkchip oder ein RFID-Inlay (Radio Frequency Identification Inlay) oder eine Zahlen- und /oder Buchstabenkombination auf der Verpackungseinheit (4) angeordnet werden.

## Claims

1. Packaging unit comprising:
at least one first identification code mark (3), which is arranged in exposed fashion on the packaging unit (4), and
at least one second identification code mark (5), which is arranged in concealed fashion on the packaging unit (4),
wherein a first data record associated with the at least first identification code mark (3) and a second data record associated with the at least second identification code mark (5) are retrievably recorded in at least one central database, and
wherein the second data record is uniquely associated in each case with the respective first data record,
wherein the at least first identification code mark (3) and the at least second identification code mark (5) are arranged one on top of the other on the packaging unit (4),
**characterized in that** the second identification code mark (5) arranged beneath the first is accessible by destroying the first identification code mark (3).

2. Packaging unit according to claim 1, **characterized in that** the at least first identification code mark (3) and the at least second identification code mark (5) are printed at a distance from one another on a single-sided adhesive label film (6).

3. Packaging unit according to one of claims 1 or 2, **characterized in that** the at least second identification code mark (5) is concealed by an optically nontransparent peel-off film (8).

4. Packaging unit according to one of claims 1 to 3, **characterized in that** the at least second identification code mark (5) is concealed by an optically nontransparent scratch-off film (10).

5. Packaging unit according to claim 1, **characterized in that** the at least first identification code mark (3) is printed on a peel-off film (8).

6. Packaging unit according to claim 5, **characterized in that** the at least first identification code mark (3) is printed on a scratch-off film (10), and the second identification code mark (5) arranged beneath the first is accessible by destroying the first identification code mark (3).

7. Packaging unit according to claim 5 or claim 6, **characterized in that** the at least second identification code mark (5) is printed on a single-sided adhesive label film (6) and is concealed by the first identification code mark (3).

8. Method with labeling of packaging for verifying a packaged product that has the following method steps:
- generation of a first data record for substances or products to be protected;
- generation of a second data record of the substances or products to be protected that is associated with the first data record;
- creation and storing of a list of the first and associated second data records;
- production of first identification code marks (3) on the basis of the first data records of the list;
- production of second identification code marks (5), associated with the first, on the basis of the second data records of the list;
- application of one of the first identification code marks (3) and the associated second identification code mark (5) to a packaging unit (4) of substances or products to be protected;
- initial scanning of the at least first and second identification code marks (3, 5) of the labeled packaging unit (4) in order to update the list while storing the updated list in a computer;
- concealing the second identification code mark (5) on the packaging as the master identification code mark of a multi-code secure label in that the at least first identification code mark (3) and the at least second identification code mark (5) are arranged one on top of the other on the packaging unit (4),
- performance of an authentication during a further handling of the products in the packaging units (4) by again scanning the identification code marks (3, 5), wherein the second identification code mark (5) arranged beneath the first becomes accessible by destroying the first identification code mark (3), and comparison of the scanned data records with stored data records of the updated list, and
- verification of the identification code marks (3, 5) as genuine when there is a match and as counterfeit when there is no match,
- identifying the substances or products in the packaging units (4) having counterfeit first and/or second identification code marks (3, 5) as counterfeits.

9. Method according to claim 8, **characterized in that** the arrangement of the at least first and second identification code marks (3, 5) on the packaging unit (4) and the initial scanning of the same take place in a closed area (12) of a labeling machine.

10. Method according to claim 8 or claim 9, **characterized in that** a printed bar code or a printed data matrix code, a radio chip or an RFID inlay (radio frequency identification inlay), or a combination of numbers and/or letters are arranged on the packaging unit (4) as the at least first identification code mark (3) and/or as the at least second identification code mark (5).

## Revendications

1. Unité d'emballage comprenant :
au moins un premier timbre pour code de marquage (3) qui est agencé visiblement sur l'unité d'emballage (4), et
au moins un deuxième timbre pour code de marquage (5) qui est agencé sur l'unité d'emballage (4) en étant occulté,
un premier jeu de données étant affecté au premier timbre pour code de marquage (3),
au moins au nombre de un, et un deuxième jeu de données étant affecté au deuxième timbre pour code de marquage (5), au moins au nombre de un, et stockés dans une base de données et étant consultables et
le deuxième jeu de données étant clairement affecté au premier jeu de données sachant que
le premier timbre pour code de marquage (3), au moins au nombre de un, et le deuxième timbre pour code de marquage (5), au moins au nombre de un, sont agencés l'un au-dessus de l'autre sur l'unité d'emballage (4) et sont **caractérisés en ce que** le deuxième timbre pour code de marquage (5) n'est accessible qu'après destruction du premier timbre pour code de marquage (3).

2. Unité d'emballage selon la revendication 1, **caractérisée en ce que** le premier timbre pour code de marquage (3), au moins au nombre de un, et le deuxième timbre pour code de marquage (5), au moins au nombre de un, sont imprimés avec un écart entre les deux sur un film d'étiquetage (6) autocollant sur une face.

3. Unité d'emballage selon une des revendications 1 ou revendication 2, **caractérisée en ce que** le premier timbre pour code de marquage (5), au moins au nombre de un, est recouvert d'un film arrachable (8) optiquement opaque.

4. Unité d'emballage selon une des revendications 1 à 3, **caractérisée en ce que** le deuxième timbre pour code de marquage (5), au moins au nombre de un, est recouvert d'un film à gratter optiquement opaque (10).

5. Unité d'emballage selon la revendication 1, **caractérisée en ce que** le premier timbre pour code de marquage (3), au moins au nombre de un, est imprimé sur un film arrachable (8).

6. Unité d'emballage selon la revendication 5, **caractérisée en ce que** le premier timbre pour code de marquage (3), au moins au nombre de un, est imprimé sur un film à gratter (10) et que le deuxième timbre pour code de marquage (5), au moins au nombre de un, est accessible après destruction du premier timbre pour code de marquage (3).

7. Unité d'emballage selon la revendication 5 ou la revendication 6, **caractérisée en ce que** le deuxième timbre pour code de marquage (5), au moins au nombre de un, est imprimé sur un film d'étiquetage (6) autocollant sur une face et est recouvert par le deuxième timbre pour code de marquage (3).

8. Procédé pour marquage d'un emballage pour vérification d'un produit emballé, présentant les étapes suivantes :
- création d'un premier jeu de données pour les substances ou produits à protéger,
- création d'un deuxième jeu de données affecté au premier jeu de données des substances ou produits à protéger
- établissement et mémorisation d'une liste des premiers et deuxièmes jeux de données affectés
- fabrication des premiers timbres pour code de marquage (3) sur la base des premiers jeux de données de la liste
- fabrication des deuxièmes timbres pour code de marquage (5) affectés aux premiers timbres pour code de marquage sur la base des deuxièmes jeux de données de la liste
- application d'un des premiers timbre pour code de marquage (3) et du deuxième timbre pour code de marquage (5) affecté au premier sur une unité d'emballage (4) contenant des substances et produits à protéger
- premier balayage des premiers et deuxièmes timbres pour code de marquage (3, 5), au moins au nombre de un respectivement, sur l'unité d'emballage marquée (4) pour actualiser la liste avec mémorisation de la liste actualisée dans un ordinateur.
- recouvrement du deuxième timbre pour code de marquage (5) sur l'emballage, comme timbre pour code de marquage maître, d'une étiquette sécurisée multi-codes, le premier timbre pour code de marquage (3), au moins au nombre de un, et le deuxième timbre pour code de marquage (5), au moins au nombre de un, étant disposés l'un au-dessus de l'autre sur l'unité d'emballage (4).
- exécution d' une authentification lors d'une nouvelle manipulation des produits contenus dans l'unité d'emballage (4) avec à nouveau balayage des timbres pour code de marquage (3, 5), le deuxième timbre pour code de marquage (5) étant accessible après destruction du premier timbre pour code de marquage (3) et comparaison des jeux de données scannés avec les jeux de données mémorisés de la liste actualisée
- vérification des timbres pour code de marquage (3, 5) comme authentiques en cas de concordance et comme faux en cas de non concordance.
- Identification des substances et produits contenus dans les unités d'emballage (4) avec des premiers et/ou deuxièmes timbres pour code de marquage (3, 5) falsifiés comme faux.

9. Procédé selon la revendication 8, **caractérisé en ce que** l'application des premiers timbres pour code de marquage, au moins au nombre de un, et des deuxièmes timbres pour code de marquage (3, 5), au moins au nombre de un, sur l'unité d'emballage (4) est effectuée dans un espace fermé (12) de l'étiqueteuse.

10. Procédé selon la revendication 8 ou la revendication 9, **caractérisé en ce qu'**une impression d'un timbre pour code barre ou une impression d'un timbre pour code de matrice de données, une radio puce ou un inlay RFID (Radio Frequency Identification Inlay) ou une combinaison de chiffres et/ou lettres sont agencés sur l'unité d'emballage (4), constituant le premier timbre pour code de marquage (3), au moins au nombre de un, et/ou le deuxième timbre pour code de marquage (5), au moins au nombre de un.
